# EUROPEAN PATENT APPLICATION

(11) **EP 4 066 634 A1**
(43) Date of publication of application: **05.10.2022**
(21) Application number: 22163509.7
(22) Date of filing: 22.03.2022
(51) Int. Cl.: A01K 73/02, A01K 73/045

(54) **CONTROLLABLE TRAWL DOORS AND A METHOD FOR CONTROLLING THE SAME**

(30) Priority: 23.03.2021 DK PA202170125
(71) Applicant: Volu Ventis ApS, 8600 Silkeborg (DK); P/F Vónin, 530 Fuglafjørdur (FO)
(72) Inventor: HJORT, Søren, 8600 Silkeborg (DK)
(74) Representative: Zacco Denmark A/S

(57) **Abstract**

The present invention relates to a controllable trawl door (2) comprising a plurality of hydrofoils, one or more positional control means (7) for changing the equilibrium position of the controllable trawl door, front-towing attachment facilities configured for being attached to a towing wire (3), rear-towing attachment facilities configured for being attached to one or more bridle wires (4), and a controller comprising a motion detection system. The controllable trawl door comprises means for detecting changes in towing force applied to the controllable trawl door during operation and for changing the equilibrium position of the trawl door within the water during operation. The present invention further relates to the use of the controllable trawl door and to a simple method for communication between a towing vessel (1) and trawl doors based on traction variations in the wires towing the trawl doors

## Description

### Technical Field

The present invention relates to a controllable trawl door comprising a controller with a detection system for controlling and changing the equilibrium position of the trawl door within the water during operation and to a simple method for communication between a towing vessel and trawl doors based on traction variations in the wires towing the trawl doors.

### Background art

Trawl doors for trawling have been used for more than half a century. The trawl doors are hydrodynamic wings which upon being towed by the towing vessel (trawler) will generate outwards directed forces, such that the starboard trawl door will be forced outwards in the starboard direction and the port trawl door will be forced outwards in the port direction. The trawl doors are connected to the towed trawl by bridle wires, and as the trawl doors are forced away from each other by the hydrodynamic spreading forces the trawl will gradually open laterally until the desired trawl opening spread is achieved.

The vertical opening of the trawl is not accomplished by the trawl doors, but by a combination of gravity elements attached to the lower line (so-called fishline) and buoyancy elements attached to the upper line (so-called headline).

Initially, trawl doors were just wooden flat plates, being able only to provide a very limited spreading force. Today, trawl doors are typically made of steel, and are hydrodynamically optimized complex wings able to provide a significant amount of spreading force, such that very large trawls can be opened when the trawl doors spread away from each other.

During the last decade further complexity has been added to trawl doors, namely the ability of the trawl doors to control their position in the water automatically, by using a local power source, a controller, an actuator system, and some means of movable sub-components, all built-in components on the trawl doors. The control system will typically have depth/position sensors and hence be closed-loop, such that pivotable flaps, ejectable hydrofoils, or other controllable surface, will find and maintain the correct positions, such that the desired depth/position of the trawl door (and thus the trawl being towed by the trawl doors) is kept constant at the target value set by the skipper in charge of the trawling.

In order to dynamically being able to change the depth, spreading, or both, of the trawl doors, while these are operating in the waters, typically several hundred meters below the sea surface, a communication system must exist between the towing vessel and the trawl doors. Two different systems have been developed overtime, a wired connection system, and a wireless connection system.

The wired connection system is located inside or along each towing wire between towing vessel and trawl door and is an electric cable through which signals/commands can be send between towing vessel and each trawl door.

The wireless connection system is a wireless acoustic connection comprising an acoustic modem placed on each trawl door and under the hull of the towing vessel, such that acoustic signals/commands can be emitted and received between towing vessel and trawl doors.

Among these communication systems, the wired connection has gained very little use. Embedding a sensitive cable inside a massive steel wire is not easy, and the end connections on the towing vessel (steel wire winch) and the trawl door are also prone to damage due to the rough marine environment and very heavy gear.

The wireless acoustic connection has gained some use as communication system for controllable trawl doors. Yet, the establishing of an acoustic signal/command path between the towing vessel and the trawl doors is challenging. For example, the distance between the towing vessel and the trawl doors being towed can exceed 1500 meters, and therefore the system requires powerful and hence expensive acoustic modems to be able to cover such distance. Additionally, when trawling close to the surface, the sea surface and waves act as a multi-directional sound reflector, and can limit the communication range, and the highly disturbed wake flow behind the vessel propeller will distort the acoustic signals. Lastly, service on the acoustic modem underneath the ship hull is only possible when the towing vessel is in dock, i.e. approximately once every year.

This means that the existing communication systems between a towing vessel and the trawl doors being towed by the towing vessel are based on expensive, sensitive equipment which is quite error-prone with the risk of causing expensive down-time of the trawling operation.

It is therefore an object of the present invention to provide a solution for obtaining the desired controllability of the trawl door's position in the water, in which the above-mentioned disadvantages known in the art are overcome.

Further, it is an object of the present invention to overcome the above obstacles and hereby provide a more widespread use of controllable trawl doors.

Additionally, it is an object of the present invention to provide a trawl door that allows communication with the towing vessel without the above problems.

### Summary

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

All directions in regards to the trawl door as disclosed herein, such as upper, lower, horizontal forward/mid and aft end, all relate to the positions in or on the trawl door when the trawl door is in its operational position, such as in the water during trawl operation.

The present invention consists of a simplified way of communicating commands from the towing vessel to each of the trawl doors; hence, disclosed herein in a first aspect is a controllable trawl door comprising: a plurality of hydrofoils extending in parallel in a longitudinal direction of the hydrofoils and being arranged in an overlapping sequence so that one or more flow channels are formed between neighbouring hydrofoils; one or more positional control means for changing the equilibrium position of the controllable trawl door within the water during operation of the controllable trawl door; front-towing attachment facilities configured for being attached to a towing wire; rear-towing attachment facilities configured for being attached to one or more bridle wires; wherein the controllable trawl door further comprises a controller comprising a motion detection system; wherein the motion detection system comprises means for detecting changes in towing force applied to the controllable trawl door during operation of the controllable trawl door and determine an equilibrium position based on the detected change in towing force applied to the controllable trawl door; and wherein the controller is further arranged for controlling the positional control means for changing the equilibrium position of the controllable trawl door within the water during operation of the controllable trawl door in accordance with the determined equilibrium position.

By towing force is meant the traction force in the towing wire during operation of the trawl in the water. This traction force originates from the vessel being thrusted forward by the ship propeller in combination with the towing wire release/retract rate of the winches on the vessel. The towing force, in the unit "tons traction" or "Newton" of each towing wire is also measured by the winch system and displayed on a screen at the bridge, so it can be monitored at all times by the skipper. The present invention utilizes a controller having a motion detection system on the controllable trawl door, which is able to measure directly or via other factors, such as speed or acceleration of the trawl door, the towing force applied to the trawl door during operation of the trawl door. The controller is further able to act accordingly, when it detects a change in towing force, hereby adjusting the equilibrium position of the trawl door in water.

The towing force of the towing wire is responsible for the velocity by which trawl doors and trawl are towed through the water. Primarily, the towing force can be changed in two ways:
- When increasing the thrust on the ship propeller and thereby increasing the vessel velocity, then the towing force of the towing wire will also increase, and vice versa.
- When retracting towing wire with the winch, then the towing velocity will increase, causing increased towing wire traction and an increased towing force, and vice versa.

The most sudden change in towing force, and therefore the most easily detectable change, is when towing wire is instantly released or retracted by the winches. A sudden change in towing force will cause an acceleration of the trawl door, which is directly detectable by the motion detection system, e.g. by means of an accelerometer or other sensor device. This may be utilised by incorporating a threshold in the motion detection system, such that it is this sudden larger change in towing force that is detected, and not a smaller longer change, such as the change in speed of the vessel. When the sensors detect only small changes, the control system will interpret the sensor input variations as "noise" created by e.g. the ship's movement due to surface waves, variations in towing direction, and variation in ship speed, all of which cause sensor variations below said threshold level. Contrarily, a quick change in wire length is caused when a winch (starboard, port, or both) suddenly hauls in (or release) a significant length of wire, say 50 meters or 100 meters, and thus creates much faster changes of the trawl door's speed, depth, and/or angular orientation. These changes will be above the threshold level of the motion detection system, such that the trawl door's control system will interpret the sensor input variations as a command given from the ship.

By equilibrium position is meant the position the trawl door is configured for maintaining during the trawl operation. At the start of a trawl operation, the trawl door is dumbed in the water and the winches give/release the towing wire until a predefined distance is obtained between the vessel and the trawl doors. At this distance, the winch stops releasing more towing wire and the trawl doors will then find their equilibrium position within the water and maintain this position during the trawl operation. If the equilibrium position needs to be changed, the skipper will change the towing force applied to the controllable trawl doors, e.g. by hauling in a predefined amount of towing wire using the winch system. This pull in of the towing wire will shortly accelerate the trawl doors hereby changing the towing speed of the trawl doors. The controller is able to detect the corresponding change in towing force via the motion detection system. Based on the change the controller will determine if the change given as a command, e.g. if it is above a predefined threshold limit, and if it determines that it is a command, a new equilibrium position is computed, and then obtained by adjusting the controllable trawl doors positional control means accordingly. Hereby, the skipper has adjusted the trawl depth during operation. Trawl operation may also only be defined as the time the trawl doors and the trawl net is at the predefined distance to the vessel, i.e. excluding the start and stop actions taken for setting and pulling the trawl net.

By control means is meant structural features, which are able to control the position of the controllable trawl door either alone or in combination with other control means. One example of such could be flaps at the trailing edge of the controllable trawl door, which can be actuated by use of one or more controllable actuators. Hereby the position of the trawl door during operation can be changed by actuating the flaps. Another example is a shutter positioned near or at one or more of the flow channels, where the shutters can be controlled to open or shut the flow channel, hereby again controlling the position of the trawl door during operation.

Trawling operation is typically performed at a constant towing speed with constant towing wire length, constant door-to-door distance, and a constant trawl door equilibrium orientation, i.e. constant pitch and roll angles for given towing speed and towing wire length. During windy and stormy weather, large waves will cause constant fluctuations of the towing wire traction and the trawl door positions will vary in depth and spreading around average values inside a certain range. Common controllable trawl doors today will comprise a variety of sensors, which will maintain the preferred depth of the trawl door during small fluctuations in the wire length. However, if the skipper releases or hauls in larger length of the towing wire these sensors will still maintain the pre-set depth. Therefore, if the skipper would like to change the trawling depth, he would need to communicate with the trawl doors in another way, e.g. via the acoustic system as described above.

The present invention envisions that if the skipper suddenly releases, say, 100 meter more towing wire on the trawl doors, then the motion detection system will detect this sudden large change in towing force and control the one or more positional control means such that the trawl doors will go deeper, possibly spread a little more, and change the equilibrium pitch and roll angle. The controllable trawl doors comprise the motion detection system that via e.g. sensors will measure these changes in average values, and the controller will then be able to detect the event: In this case that the skipper has released 100 meters more wire. The opposite event, when the skipper hauls in 100 meter wire, would cause the opposite change in the trawl door controller average readings, and therefore be recognized by the controller as the opposite event.

The important thing is that deliberate changes in wire length is detectable by the trawl door motion detection system, and can be used as a means of communication from the towing vessel to the trawl door, e.g. to recognize a step-change command as follows:
- No towing wire length change event detected (no change in towing force, "below-threshold" changes in trawl door speed and position): Keep current positional set points for the trawl doors.
- Increased towing wire length detected (decreased towing force, "above-threshold" changes in trawl door speed and position): Increase depth set point by, e.g. 50 meters (or other values determined by a configuration of the controller).
- Reduced towing wire length detected (increase in towing force, "above-threshold" changes in trawl door speed and position): Reduce depth set point by, say 50 meters (or other values determined by a configuration of the controller).

Other, more complex, commands can be defined, involving not only depth change commands but also spreading change commands, but in a simple form reducing/increasing a length of towing wire can be detected by the controller as a +/- step command for the trawl door depth target set point. This means that the preferred command from the skipper is in regards to depth of the trawl doors, where other secondary commands may also be included, such as spread or roll or other positional terms.

In order to maintain same towing wire length but adjust the depth of the trawl doors, a step command in e.g. water depth could include the 100 m (or other suitable length) towing wire change, immediately followed by the opposite wire change, and the controller could be configured to recognize this as a command for increasing the depth, and vice versa.

The towing force of the towing wire towing each trawl door, to the starboard and port side, is controlled and monitored from the towing vessels bridge. The skipper controls how much towing wire is rolled out by the starboard and port wire winch by setting a set point for each towing wire, e.g. 1.500 meters. Each winch will then release or retract towing wire until matching the specified towing wire length. Once matched, the winches will continuously release and retract a bit of wire, e.g. up to 1-2 meters, counteracting the waves' heave and plunge impact, in order to compensate for the surface-wave-induced motion of the vessel. By doing so, the towing force of each wire will remain largely constant, so the impact of the surface waves on the vessel does not transmit much down to the trawl doors and trawl. The motion detection system may further be configured to activated delayed compared to the setting time of the trawl doors, such that the towing force is first being measured after the towing wire length has been matched.

The exact definition of the towing wire length change commands can vary, but must be such that they are easy to execute by the skipper (captain), and cause sufficient positional change of the trawl doors, such that the commands are easily detected by the controllable trawl door controller.

The above specifications of towing wire length step changes, positional depth step changes, and other quantified parameters only serve to describe and exemplify the invention. Other parameters and specific command definitions based on towing wire traction and towing wire length variations can be used.

The benefits of transmitting simple commands to the controllable trawl door through towing wire length variations are:
- Simplicity: Executing a towing wire length change is a very simple operation on a towing vessel.
- Availability: The towing wire winches used for releasing and hauling the trawl net are an integrated part of a trawl system. No need for added technology on the towing vessel.
- Robustness: The towing wire winches represent existing mature technology. The Technology Readiness Level (TRL) is at the highest level.
- Easy service: The control system items are all located on the trawl door itself, and easily accessible, and changeable. No control system items are located e.g. under the hull of the vessel, as is the case with e.g. with an acoustic modem communication system.
- No sensitive cable wire is needed between the vessel and the trawl door for communication.
- The use of the wire as a means of communication from the bridge to the trawl doors, makes the use of acoustic- or wire-based communication obsolete. This represents a very significant cost reduction.
- Depending of the trawl door design, the control system can be positioned inside a cavity of the trawl door, where it is well protected against bumps and collision between the trawl door and e.g. the ship hull.

It is also a preferred feature of the invention that the commands given from the ship through releasing and/or hauling in wire with the winches are binary. This means, that if the command is successfully recognized by the trawl door's control system, then the new fixed-step trawl door position will be obtained. If the command is not recognized, then no change of trawl door position will happen. This strategy significantly reduces the risk of erroneous positioning of the trawl doors. If the control system were set up to react e.g. proportionally to measured changes in wire traction, then the trawl doors would constantly adjust, and something as simple as keeping the same depth in the water for both starboard and port trawl door would become difficult. Therefore, a fixed-step positioning response to an "above threshold" detected traction change (detected though speed and/or position change of the trawl door) is a simpler and more reliable strategy.

Specifically, the control system may be designed not to react to wire traction variations caused by ship speed variations. Ship speed variations are by nature slow, since they involve changing the inertia of the entire vessel. These slow variations are well below the trawl door control system's threshold limit and will thus not be detected as a traction wire command. Thus in one or more embodiments, the controller is pre-set with a predefined threshold of changes in towing force applied to the controllable trawl door during operation of the controllable trawl door, wherein the predefined threshold is configured such that it excludes a change in towing force applied exclusively by a variation in speed of the vessel during operation, wherein exceeding this threshold causes the controller to determine a new equilibrium position based on the detected change in towing force applied to the controllable trawl door.

Disclosed herein in a second aspect is a use of a set of controllable trawl doors comprising one starboard controllable trawl door and one port controllable trawl door, for trawling operations, wherein the controllable trawl doors are controllable trawl doors according to the first aspect.

Disclosed herein in a third aspect is a use of a set of controllable trawl doors comprising one starboard controllable trawl door and one port controllable trawl door, for towing a trawl, wherein the controllable trawl doors are controllable trawl doors according to the first aspect.

Disclosed herein in a fourth aspect is a use of a set of controllable trawl doors comprising one starboard controllable trawl door and one port controllable trawl door, for towing seismic equipment for seabed measurements for measuring the seabed composition, and wherein the controllable trawl doors are controllable trawl doors according to the first aspect.

Disclosed herein in a fifth aspect is a method for communication between a towing vessel and one or more controllable trawl doors, wherein the one or more controllable trawl doors comprises: one or more positional control means for changing the equilibrium position of the controllable trawl door within the water during operation of the controllable trawl door; front-towing attachment facilities configured for being attached to a towing wire; and a controller comprising a motion detection system, wherein the motion detection system comprises means for detecting changes in towing force applied to the controllable trawl door during operation of the controllable trawl door and determine an equilibrium position based on the detected change in towing force applied to the controllable trawl door, and wherein the controller is further arranged for controlling the positional control means for changing the equilibrium position of the controllable trawl door within the water during operation of the controllable trawl door in accordance with the determined equilibrium position; and wherein the method comprises the following steps: monitoring the variations in towing force applied to the one or more controllable trawl doors; and changing the depth of the one or more controllable trawl doors by: increasing towing wire length of a towing wire attached to the front-towing attachment facilities of the one or more controllable trawl doors during operation; or decreasing towing wire length of a towing wire attached to the front-towing attachment facilities of the one or more controllable trawl doors during operation; the controller recognizes the change in towing wire length as a command for adjusting the equilibrium position of the controllable trawl doors via the one or more positional control means; and adjust the equilibrium position accordingly.

The term "comprising", "comprises", or "to comprise" is to be interpreted as specifying the presence of the stated parts, steps, features, or components, but does not exclude the presence of one of more additional parts, steps, features, or components.

### Brief description of the drawings

In the following, exemplary embodiments of the invention are described in more detail with reference to the figures, of which
- Figure 1: shows a perspective view of a trawling vessel with trawl doors and trawl.
- Figure 2: shows a perspective view of a controllable trawl door with inclusion of the sub-components related to the controllability features.

### Detailed description of the invention

The description herein of any aspect or embodiment of the invention using terms such as "comprising", "having," "including," or "containing" with reference to an element or elements is intended to provide support for a similar aspect or embodiment of the invention that "consists of", "consists essentially of", or "substantially comprises" that particular element or elements, unless otherwise stated or clearly contradicted by context, e.g. a composition described herein as comprising a particular element should be understood as also describing a composition consisting of that element, unless otherwise stated or clearly contradicted by context. It will be further understood that the terms "comprises," "comprising," "includes" and/or "including," when used in this specification, specify the presence of stated features, integers, steps, operations, elements, and/or components, but do not preclude the presence or addition of one or more other features, integers, steps, operations, elements, components, and/or groups thereof.

When describing the below embodiments, the present invention envisages all possible combinations and permutations of the below described embodiments with the above disclosed aspects. The present invention envisions any of the below embodiments used in any of the above five aspects.

The invention relates to a controllable trawl door comprising: a plurality of hydrofoils extending in parallel in a longitudinal direction of the hydrofoils and being arranged in an overlapping sequence so that one or more flow channels are formed between neighbouring hydrofoils; one or more positional control means for changing the equilibrium position of the controllable trawl door within the water during operation of the controllable trawl door; front-towing attachment facilities configured for being attached to a towing wire; rear-towing attachment facilities configured for being attached to one or more bridle wires; wherein the controllable trawl door further comprises a controller comprising a motion detection system; wherein the motion detection system comprises means for detecting changes in towing force applied to the controllable trawl door during operation of the controllable trawl door and determine an equilibrium position based on the detected change in towing force applied to the controllable trawl door; and wherein the controller is further arranged for controlling the positional control means for changing the equilibrium position of the controllable trawl door within the water during operation of the controllable trawl door in accordance with the determined equilibrium position.

In most cases, the towing force is applied to the front-towing attachment facilities via the towing wire during operation in the water when the vessel tows the trawl; hence, in one or more embodiments, the motion detection system comprises means for detecting changes in towing force applied to the front-towing attachment facilities of the controllable trawl door during operation of the controllable trawl door.

The towing force can indirectly be measured as a change in towing speed of the trawl door. E.g. by towing the trawl at a constant speed of the vessel, the towing speed can be changed by releasing more towing wire via the winch system, which will temporarily decrease the towing speed (speed of vessel minus speed of towing wire release), or the towing speed can be changed by hauling in towing wire, which will temporarily increase the towing speed (speed of vessel plus speed of towing wire 'pull').

In one or more embodiments, the means for detecting changes in towing force is means for detecting changes in trawling speed of the controllable trawl door during operation of the controllable trawl door.

In one or more embodiments, the means for detecting changes in towing force is one or more sensors configured for detecting changes in towing force.

The towing force can indirectly be measured as a change in speed of the trawl door as discussed above. Alternatively, it may be measured as a change in acceleration of the trawl door. E.g. by towing the trawl at a constant speed of the vessel, the trawl door is accelerated by hauling in towing wire and is deaccelerated by releasing towing wire.

In one or more embodiments, the one or more sensors configured for detecting changes in towing force is selected from one or more sensors arranged for detecting trawling speed of the controllable trawl door, one or more sensors arranged for detecting acceleration of the controllable trawl door, or a combination hereof.

In one or more embodiments, the means for detecting changes in towing force is one or more sensors configured for detecting changes in towing force, wherein the one or more sensors configured for detecting changes in towing force is selected from one or more sensors arranged for detecting trawling speed of the controllable trawl door, one or more sensors arranged for detecting acceleration of the controllable trawl door, or a combination hereof.

In one or more embodiments, the one or more sensors arranged for detecting acceleration of the controllable trawl door is one or more accelerometers.

In one or more embodiments, the change of the equilibrium position of the controllable trawl door is established by changing the pitch angle (P).

The pitch angle of the controllable trawl door is defined just like the pitch angle of an aircraft wing. Conceptually, a trawl door is a hydrodynamic wing being towed horizontally through the water by the towing vessel. Increase of the pitch angle will make the trawl door upper end rotate a little aft and the lower end a little forward, such that the trawl door will tend to go higher in the water. Contrarily, a decrease of the pitch angle will make the trawl door upper end rotate a little forward and the lower end a little aft, such that the trawl door will tend to go deeper in the water.

In one or more embodiments, the change of the equilibrium position of the controllable trawl door is established by changing the roll angle (R).

The roll angle of the operating trawl door is defined just like the roll angle of an aircraft wing. Increase of the roll angle will make the trawl door upper end rotate a little inwards towards the other trawl door, and the lower end a little outwards. Because the spreading force is always perpendicular to the outward surface of the trawl door, such a change of the roll angle will change the vertical component of the spreading force and the trawl door will tend to go higher in the water. Contrarily, a decrease of the roll angle will make the trawl door upper end rotate a little outwards away from the other trawl door, and the lower end a little inwards, such that the trawl door will tend to go deeper in the water.

In one or more embodiments, the change of the equilibrium position of the controllable trawl door is established by changing the roll angle (R) and the pitch angle (P) in combination.

In one or more embodiments, the controllable trawl door further comprises one or more sensors other than the motion detection system.

In one or more embodiments, the one or more sensors other than the motion detection system is selected from a sensor configured for sensing water depth, a sensor configured for sensing pitch and roll angles, a sensor configured for sensing door-to-door distance, or a combination hereof.

In one or more embodiments, the controllable trawl door further comprises one or more sensors other than the motion detection system, wherein the one or more sensors other than the motion detection system is selected from a sensor configured for sensing water depth, a sensor configured for sensing pitch and roll angles, a sensor configured for sensing door-to-door distance, or a combination hereof.

By a door-to-door distance is meant the distance between a pair of controllable trawl doors used during normal trawling operations.

One advantage of including a door-to-door sensor could be that during trawling, the towing vessel has a constant direction most of the time, but directional changes are common, ranging from smaller adjustments to 180 degree full turns. Such a turn will also cause the trawl door depth and orientation angles (pitch and roll) to change, but since the trawl door on the inside of the turning circle will be towed slower, and the trawl door on the outside of the turning circle will be towed faster, the sensor change pattern on the trawl doors will be anti-symmetric. Contrarily, when a wire length step-change is executed by the skipper during straight course, the sensor change pattern on the trawl doors will be symmetric. In that way, the controller system on the trawl doors will be able to recognize a wire length step change, with little risk of confusing the event with e.g. a directional change.

In one or more embodiments, the sensor configured for sensing water depth is a pressure sensor and/or the sensor configured for sensing pitch and roll angles is a gravity sensor and/or the sensor configured for sensing door-to-door distance is an acoustic door-to-door distance sensor.

In one or more embodiments, the controllable trawl door further comprises one or more controlled hydrodynamic surfaces controlled by the one or more positional control means.

In one or more embodiments, the one or more controlled hydrodynamic surfaces is selected from one or more pivotable flaps, one or more ejectable hydrofoils, one or more shutters positioned at or within the flow channels, or combinations hereof.

In one or more embodiments, the controllable trawl door further comprises one or more controlled hydrodynamic surfaces controlled by the one or more positional control means, wherein the one or more controlled hydrodynamic surfaces is selected from one or more pivotable flaps, one or more ejectable hydrofoils, one or more shutters positioned at or within the flow channels, or combinations hereof.

In one or more embodiments, the controller further comprises a power supply, a processor, or combinations hereof.

In one or more embodiments, the controllable trawl door further comprises an internal cavity. In one or more embodiments, the internal cavity is a cavity, which are in fluid connection with water during trawling operation. This means that the cavity is to be flooded with water whenever the trawl door is submerged in water, e.g. during normal trawling operation. This means, that the cavity is not an interior closed cavity, but at least comprises one opening in which it can be in fluid connected with water. Alternatively, the internal cavity may be a closed cavity not being in fluid communication with the surrounding water during operation.

In one or more embodiments, the internal cavity comprises a spanwise upper internal cavity and a spanwise lower internal cavity.

In one or more embodiments, a buoyancy element is positioned in the upper internal cavity. In one or more embodiments, a gravity element is positioned in the lower internal cavity.

A buoyancy element is an element, with a mass density lower than the mass density of water, such as seawater. The buoyancy element may e.g. be made of syntactic foam encapsulated in a polyethylene external skin. The buoyancy element can be optimized to reach the required buoyancy at operating water depth.

A gravity element is an element, with a mass density higher than the mass density of water, such as seawater. The gravity element may e.g. be made of iron or another density heavy material. The gravity element can be optimized to reach the required volume gravity mass at operating water depth.

In one or more embodiments, the controller is positioned in the internal cavity.

In one or more embodiments, the controllable trawl door further comprises an internal cavity wherein at least the controller is positioned in the internal cavity.

In one or more embodiments, one or more spanwise section endplates connect on each side to a spanwise section, such that the spanwise sections are angled in relation to each other.

In one or more embodiments, a keel is attached to the bottom of the controllable trawl door for bottom trawling use on the seabed.

In one or more embodiments, during operation of the controllable trawl door a vertical depth of the controllable trawl door below the sea surface is pre-set to a predefined target value.

In one or more embodiments, during operation of the controllable trawl door a vertical height of the controllable trawl door above the seabed is pre-set to a predefined target value.

In one or more embodiments, during operation of the controllable trawl door the equilibrium position of the controllable trawl door in the water is specified to remain the same during different operating conditions, such as strong cross-flow, turnarounds, sharp turns, etc. unless determined otherwise by the controller.

In one or more embodiments, during operation of the controllable trawl door the roll angle (R) of the controllable trawl door is pre-set to a predefined target value.

In one or more embodiments, during operation of the controllable trawl door the pitch angle (P) of the controllable trawl door is pre-set to a predefined target value.

In one or more embodiments, the motion detection system comprises sensors for detecting user-applied towing force changes in a towing wire that tows the controllable trawl door during operation of the controllable trawl door.

In one or more embodiments, the motion detection system comprises sensors for detecting user-applied towing force changes in a towing wire that tows the controllable trawl door during operation of the controllable trawl door applied by a winch system on a towing vessel.

In one or more embodiments, the motion detection system comprises sensors for detecting user-applied towing force changes in a towing wire that tows the controllable trawl door during operation of the controllable trawl door applied by a towing vessel.

In one or more embodiments, the controller is pre-set with a predefined threshold of changes in towing force applied to the controllable trawl door during operation of the controllable trawl door, wherein exceeding this threshold causes the controller to determine a new equilibrium position based on the detected change in towing force applied to the controllable trawl door.

In one or more embodiments, the predefined threshold is configured such that it excludes a change in towing force applied exclusively by a variation in speed of the vessel during operation. By excluding a change in towing force applied exclusively by a variation in speed of the vessel during operation is meant that a threshold is configured on the controller, where the threshold is larger than the change in towing force that can be applied by the vessel alone by increasing or decreasing the speed of the vessel, while still trawling. This can be done in different ways, one being the time it takes for the increased towing force. When the winch halls in wire, the trawl door is pulled towards the vessel at a sudden acceleration far larger than what a vessel can provide by increasing its speed.

This means that the controller is pre-set with a threshold of change in towing force. If the change in towing force detected is below the pre-set threshold, the controller will not determine a new equilibrium position but maintain the already set equilibrium position. If the change in towing force is above the threshold the controller will determine a new equilibrium position of the controllable trawl door based on the change in towing force.

In one or more embodiments, the method further comprises the following sequence of steps for changing the spread of the trawl by:
- increasing towing wire length of a towing wire (3) attached to the front-towing attachment facilities of the one or more controllable trawl doors (2) during operation, or
- decreasing towing wire length of a towing wire (3) attached to the front-towing attachment facilities of the one or more controllable trawl doors (2) during operation;
- the controller recognizes the change in towing wire length as a command for adjusting the spread of the trawl via the one or more positional control means;
- and adjusts the spread accordingly.

The disclosed trawl door may comprise an upper half and a lower half when vertically positioned, as during normal trawl operation, hence, in one or more embodiments, the trawl door is made of a first half and a second half. The trawl door may however, not be limited to be made of only two halves.

The controllable trawl door comprises front-towing attachment facilities configured for being attached to a towing wire and rear-towing attachment facilities configured for being attached to one or more bridle wires. These facilities may be in the form of front wire attachment holes and one or more rear bridle attachment holes. The front wire attachment holes and rear bridle attachment holes may be in the horizontal forward/mid and aft end of the trawl door, respectively. Front-towing attachment facilities (or front wire attachment holes) are used to connect one or several towing wires from the towing vessel to the controllable trawl door, so the trawl door may be used during trawling operations. Rear-towing attachment facilities (or rear bridle attachment holes) are used to connect one or several bridle wires from the trawl/fishing net/trawling net to the controllable trawl door, so the trawl door may be used during trawling operations for dragging a trawl/fishing net/trawling net. The trawl door may also be used for towing seismic equipment for seabed measurements used for measuring the seabed composition.

In one or more embodiments, the front-towing attachment facilities are positioned in the horizontal forward/mid of the trawl door. In one or more embodiments, the rear-towing attachment facilities are positioned in the aft end of the trawl door.

In one or more embodiments, the trawl door further comprises section endplates and stiffeners.

In one or more embodiments, the plurality of hydrofoils at least comprises the first hydrofoil defining the leading edge of the overlapping sequence of the plurality of hydrofoils and the last hydrofoil defining the trailing edge of the overlapping sequence of the plurality of hydrofoils. The plurality of hydrofoils, as disclosed herein, may be multiple hydrofoils, such as 2, 3, 4, 5, 6 hydrofoils. The sequence of hydrofoils will be defined by a leading edge, the foremost edge when dragging/trawling the trawl door through water during trawling operation, and a trailing edge, the rearmost edge when dragging/trawling the trawl door through water during trawling operation.

In one or more embodiments, the plurality of hydrofoils at least comprises the first hydrofoil defining the leading edge of the overlapping sequence of the plurality of hydrofoils and the last hydrofoil defining the trailing edge of the overlapping sequence of the plurality of hydrofoils and one or more middle hydrofoils positioned between the first hydrofoil and the last hydrofoil.

In one or more embodiments, the one or more middle hydrofoils comprises at least two hydrofoils.

In one or more embodiments, the plurality of hydrofoils comprises at least three hydrofoils. In one or more embodiments, the plurality of hydrofoils comprises at least four hydrofoils.

The trawl door may be divided into two or several sections. In one or more embodiments, the trawl door is divided into a first half and a second half, wherein the first half comprises a first half of the plurality of hydrofoils and a first half of the one or more positional control means, and wherein the second half comprises a second half of the plurality of hydrofoils and a second half of the one or more positional control means. The trawl door may also be divided into three parts, four parts, five parts, etc.

The shape of the trawl door in the span wise direction may vary. In one or more embodiments, the trawl door is linear along the span wise direction. In another embodiment, the trawl door is curved, bent, or angled, along the span wise direction. In yet another embodiment, the trawl door comprises two halves, wherein the two halves are linear along the span wise direction of each half, and wherein the two halves are connected to form a non-linear angle of the trawl door along the span wise direction of the trawl door.

By "span wise" is meant the dimension along the length of the trawl door perpendicular to the passing water when in use. When the trawl door is vertically erected, the span wise direction is the vertical direction.

In practice, a trawl door will probably never be curved in the span wise direction, as it will require double-curved surfaces and thus impossible to make in a simple manufacture using rolled steel sheets. Many trawl doors used today have one or more bends of 5, 10, 12, or 16 degrees. This may make the span wise direction of the trawl door appear curved, but in reality, it is constructed of multiple linear pieces connected with bends between each piece.

In one or more embodiments, the trawl door comprises plurality of linear pieces connected with bends of between 2 and 20 degrees between each piece in the span wise direction.

The shape/arrangement of the trawl door may further be defined. In one or more embodiments, the plurality of hydrofoils are one-sided.

By one-sided is meant that the hydrofoil is made by just one flat or curved plate, such that the pressure side and suction side are offset only by the plate thickness.

In one or more embodiments, the plurality of one-sided hydrofoils are made by rolled metal sheets.

In one or more embodiments, the plurality of hydrofoils are double-sided.

In one or more embodiments, the plurality of hydrofoils are hybrids between single-sided and dou ble-sided.

The trawl door as disclosed herein may be used for multiple variations of trawl operation. Hence, in one or more embodiments, the trawl door is of pelagic type, semi-pelagic type, bottom-door type, or combinations hereof.

The hydrofoils may be made of the same or different material. In one or more embodiments, one or more of the plurality of hydrofoils are made from metal or a lightweight material such as plastic or rubber, wood, or fiber composite material.

When describing the embodiments, the combinations and permutations of all possible embodiments have not been explicitly described. Nevertheless, the mere fact that certain measures are recited in mutually different dependent claims or described in different embodiments does not indicate that a combination of these measures cannot be used to advantage. The present invention envisages all possible combinations and permutations of the described embodiments.

### Detailed description of the drawings

Various examples are described hereinafter with reference to the figures. It should also be noted that the figures are only intended to facilitate the description of the examples. They are not intended as an exhaustive description of the claimed invention or as a limitation on the scope of the claimed invention. In addition, an illustrated example needs not have all the aspects or advantages shown. An aspect or an advantage described in conjunction with a particular example is not necessarily limited to that example and can be practiced in any other examples even if not so illustrated, or if not so explicitly described.

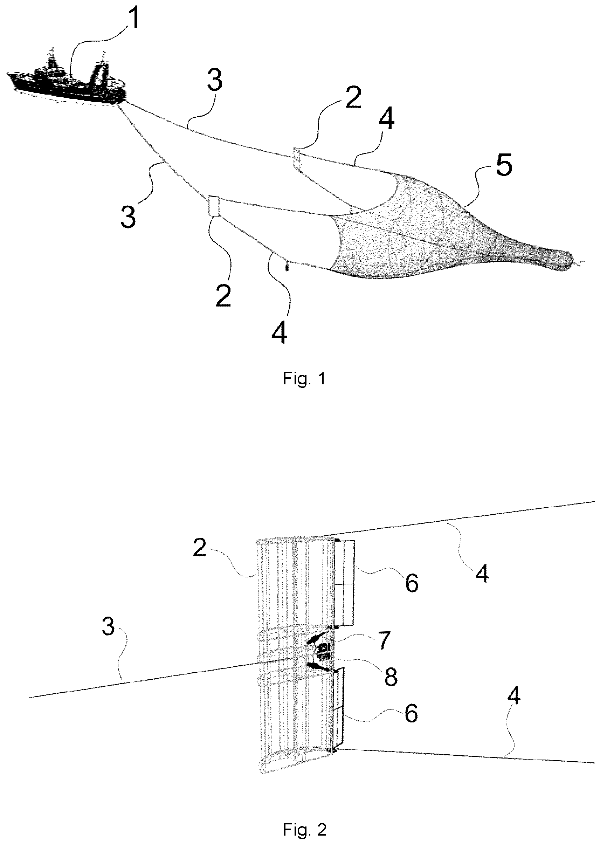

Fig. 1 is a perspective view of a conventional trawling operation comprising a (fishing) towing vessel 1 towing a set of a starboard and a port controllable trawl doors 2, which provide spreading force for the trawl 5 being towed by said set of controllable trawl doors 2. The figure shows, how the controllable trawl doors 2 are connected and trawled by the towing vessel 1 via a towing wire 3 connected to each controllable trawl door 2. The wires 3 may be attached as seen in the figure in the mid-section of the controllable trawl door 2 e.g. via one or more attachment holes or other means of attachment. The trawl 5 (fishing net) is connected to each controllable trawl door 2 via two bridle wires 4. These may be, as shown here, connected to the controllable trawl door 2 in the aft top and bottom of the controllable trawl door 2.

Fig. 2 is a perspective view of a controllable trawl door 2 during operation in the water. The controllable trawl door 2 is connected to a towing wire 3, which is towed by the towing vessel (not shown). The trawl (not shown) is connected to the controllable trawl door 2 via two bridle wires 4 connected to the aft top and bottom of the controllable trawl door 2. The controllable trawl door 2 further comprises a controller 8 positioned at the back middle position of the controllable trawl door 2. The controller comprises a motion detection system (not shown), which are able to detect the towing force variations applied to the controllable trawl door 2 by the towing wire 3. The towing force originates from a combination of the towing speed of the towing vessel and the release speed of towing wire 3 from a towing winch system (not shown) on the towing vessel. The release speed of the towing wire 3 from the towing winch can contribute positively (increase) to the towing force, if the winch system is hauling in towing wire 3 as this will increase the speed of which the controllable trawl door 2 is moving through the water during operation. The release speed of the towing wire 3 from the towing winch can also contribute negatively (reduce) to the towing force, if the winch system is releasing towing wire 3 as this will decrease the speed of which the controllable trawl door 2 is moving through the water during operation.

The controller 8 as shown in figure 2 is configured for measuring this change in towing force via a motion detection system, which could e.g. comprise different sensors able to detect this change.

One such sensor could be an accelerometer able to detect if the controllable trawl door 2 is momentarily accelerated, which would correspond to an increase in towing force.

The controllable trawl door 2 as shown in figure 2 further comprises two positional control means 7 in the form of actuators, which control two controlled hydrodynamic surfaces 6 in the form of trailing edge flaps. The positional control means 7 could be other components who directly are able to control the position of the controllable trawl door 2 during operation of said controllable trawl door 2 in the water. The positional control means 7 could also as shown here in figure 2 control the position indirectly by controlling one or more controlled hydrodynamic surfaces 6. Such controlled hydrodynamic surfaces 6 could be as shown here pivotable flaps at the trailing edge of the controllable trawl door 2; however, it could also be various other structures able to either change the roll angle and/or the pitch angle of the controllable trawl door 2, hereby changing the depth and/or spread of a pair of controllable trawl doors 2 and hereby also the trawl. Examples of other such structures could be, but not limited to, one or more ejectable hydrofoils or one or more shutters positioned at or within the flow channels or combinations of these, such as both pivotable flaps and shutters; shutter and ejectable hydrofoils; ejectable hydrofoils and pivotable flaps; or ejectable hydrofoils, pivotable flaps, and shutters.

### References

**1 -** Towing vessel
**2 -** Controllable trawl door
**3 -** Towing wire
**4 -** Bridle wire
**5 -** Trawl
**6 -** Controlled hydrodynamic surface
**7 -** Positional control means
**8 -** Controller

## Claims

1. A controllable trawl door (2) comprising:
a plurality of hydrofoils extending in parallel in a longitudinal direction of the hydrofoils and being arranged in an overlapping sequence so that one or more flow channels are formed between neighbouring hydrofoils;
one or more positional control means (7) for changing the equilibrium position of the controllable trawl door (2) within the water during operation of the controllable trawl door (2);
front-towing attachment facilities configured for being attached to a towing wire (3);
rear-towing attachment facilities configured for being attached to one or more bridle wires (4);
wherein the controllable trawl door (2) further comprises a controller (8) comprising a motion detection system;
wherein the motion detection system comprises means for detecting changes in towing force applied to the controllable trawl door (2) during operation of the controllable trawl door (2) and determine an equilibrium position based on the detected change in towing force applied to the controllable trawl door (2); and
wherein the controller (8) is further arranged for controlling the positional control means (7) for changing the equilibrium position of the controllable trawl door (2) within the water during operation of the controllable trawl door (2) in accordance with the determined equilibrium position.

2. The controllable trawl door (2) according to claim 1, wherein the controller (8) is pre-set with a predefined threshold of changes in towing force applied to the controllable trawl door (2) during operation of the controllable trawl door (2), wherein exceeding this threshold causes the controller to determine a new equilibrium position based on the detected change in towing force applied to the controllable trawl door (2).

3. The controllable trawl door (2) according to claim 2, wherein the predefined threshold is configured such that it excludes a change in towing force applied exclusively by a variation in speed of the vessel (1) during operation.

4. The controllable trawl door (2) according to any of the preceding claims, wherein the means for detecting changes in towing force is one or more sensors configured for detecting changes in towing force, wherein the one or more sensors configured for detecting changes in towing force is selected from one or more sensors arranged for detecting trawling speed of the controllable trawl door, one or more sensors arranged for detecting acceleration of the controllable trawl door, or a combination hereof.

5. The controllable trawl door (2) according to any of the preceding claims, wherein the change of the equilibrium position of the controllable trawl door (2) is established by changing the roll angle (R) and/or the pitch angle (P).

6. The controllable trawl door (2) according to any of the preceding claims, wherein the controllable trawl door (2) further comprises one or more sensors other than the motion detection system, wherein the one or more sensors other than the motion detection system is selected from a sensor configured for sensing water depth, a sensor configured for sensing pitch and roll angles, a sensor configured for sensing door-to-door distance, or a combination hereof.

7. The controllable trawl door (2) according to any of the preceding claims, wherein the controllable trawl door (2) further comprises one or more controlled hydrodynamic surfaces (6) controlled by the one or more positional control means (7), wherein the one or more controlled hydrodynamic surfaces (6) is selected from one or more pivotable flaps, one or more ejectable hydrofoils, one or more shutters positioned at or within the flow channels, or combinations hereof.

8. The controllable trawl door (2) according to any of the preceding claims, wherein the controllable trawl door (2) further comprises an internal cavity wherein at least the controller (8) is positioned in the internal cavity.

9. The controllable trawl door (2) according to any of the preceding claims, wherein the motion detection system comprises sensors for detecting user-applied towing force changes in a towing wire (3) that tows the controllable trawl door (2) during operation of the controllable trawl door (2).

10. Use of a set of controllable trawl doors (2) comprising one starboard controllable trawl door (2) and one port controllable trawl door (2), for trawling operations, wherein the controllable trawl doors (2) are controllable trawl doors according to any of the preceding claims.

11. Use of a set of controllable trawl doors (2) comprising one starboard controllable trawl door (2) and one port controllable trawl door (2), for towing a trawl (5), wherein the controllable trawl doors (2) are controllable trawl doors according to any of claims 1-8.

12. Use of a set of controllable trawl doors (2) comprising one starboard controllable trawl door (2) and one port controllable trawl door (2), for towing seismic equipment for seabed measurements for measuring the seabed composition, and wherein the controllable trawl doors (2) are controllable trawl doors according to any of claims 1-8.

13. A method for communication between a towing vessel (1) and one or more controllable trawl doors (2), wherein the one or more controllable trawl doors (2) comprises:
one or more positional control means (7) for changing the equilibrium position of the controllable trawl door (2) within the water during operation of the controllable trawl door (2);
front-towing attachment facilities configured for being attached to a towing wire (3); and
a controller (8) comprising a motion detection system, wherein the motion detection system comprises means for detecting changes in towing force applied to the controllable trawl door (2) during operation of the controllable trawl door (2) and determine an equilibrium position based on the detected change in towing force applied to the controllable trawl door (2), and wherein the controller (8) is further arranged for controlling the positional control means (7) for changing the equilibrium position of the controllable trawl door (2) within the water during operation of the controllable trawl door (2) in accordance with the determined equilibrium position; and
wherein the method comprises the following steps:
• monitoring the towing force variations applied to the one or more controllable trawl doors (2); and
• changing the depth of the one or more controllable trawl doors (2) by:
∘ increasing towing wire length of a towing wire (3) attached to the front-towing attachment facilities of the one or more controllable trawl doors (2) during operation; or
∘ decreasing towing wire length of a towing wire (3) attached to the front-towing attachment facilities of the one or more controllable trawl doors (2) during operation;
o the controller (8) recognizes the change in towing wire (3) length as a command for adjusting the equilibrium position of the controllable trawl doors (2) via the one or more positional control means (7); and
o adjust the equilibrium position accordingly.
